# EUROPÄISCHE PATENTSCHRIFT

(11) **EP 0 902 420 B1**
(45) Veröffentlichungstag und Bekanntmachung des Hinweises auf die Patenterteilung: **23.04.2003**
(21) Anmeldenummer: 98202970.4
(22) Anmeldetag: 04.09.1998
(51) Int. Cl.: G10L 15/18

(54) **Verfahren zum Ermitteln eines Zuverlässigkeitsmasses für die Spracherkennung**
Method for determining a confidence measure for speech recognition
Procédé de détermination d'une mesure de fiabilité pour la reconnaissance de la parole

(30) Priorität: 12.09.1997 DE 19740147
(43) Veröffentlichungstag der Anmeldung: 17.03.1999
(73) Patentinhaber: Philips Corporate Intellectual Property GmbH, 20099 Hamburg (DE); Koninklijke Philips Electronics N.V., 5621 BA Eindhoven (NL)
(72) Erfinder: Rüber, Bernhard Jacob,c/o Philips Patentverwaltung, 22335 Hamburg (DE)
(74) Vertreter: Peters, Carl Heinrich, Dipl.-Ing.

(56) Entgegenhaltungen:
- EP-A- 0 702 353
- WEINTRAUB M: "LVCSR LOG-LIKELIHOOD RATIO SCORING FOR KEYWORD SPOTTING" PROCEEDINGS IEEE INTERNATIONAL CONFERENCE ON ACOUSTICS, SPEECH, AND SIGNAL PROCESSING (ICASSP'95), DETROIT, USA, Bd. 1, 9. - 12. Mai 1995, Seiten 297-300, XP000657989 INSTITUTE OF ELECTRICAL AND ELECTRONICS ENGINEERS ISBN: 0-7803-2432-3
- PATENT ABSTRACTS OF JAPAN vol. 018, no. 561 (P-1818), 26. Oktober 1994 (1994-10-26) & JP 06 202688 A (SONY CORP), 22. Juli 1994 (1994-07-22)

## Beschreibung

Die Erfindung betrifft ein Verfahren zum Ermitteln eines Zuverlässigkeitsmaßes für aus einem Sprachsignal gebildete Angaben. Dabei soll es sich um ungebundene Sprachäußerungen handeln, wobei also der Benutzer nicht beispielsweise einzelne Kommandowörter auf bestimmte Aufforderungen eines Systems abgibt, sondern wo der Benutzer in zusammenhängend gesprochener Sprache frei formulieren kann.

Bei der Erkennung zusammenhängend gesprochener Sprache ist eine Erkennung der gesprochenen Äußerung wegen der Variationsbreite solcher Äußerungen schwierig. Ein Problem ist unter anderem dabei, die Grenzen zwischen zusammenhängend gesprochenen Wörtern zu erkennen. Auch aus diesem Grunde ist eine eindeutige Erkennung einer gesprochenen Äußerung selten möglich, sondern es ergeben sich bei der Erkennung häufig mehrere Alternativen mit verschiedener Zuverlässigkeit.

Die Bestimmung von Zuverlässigkeitsmaßen für einzelne Wörter innerhalb einer gesprochenen Äußerung ist bekannt aus ICASSP 1995, Vol. I, Seiten 297 bis 300. Dabei werden aus einer Sprachäußerung einzelne Satzalternativen abgeleitet, die entsprechend ihrer akustischen Ähnlichkeit mit der Äußerung unterschiedliche Wahrscheinlichkeiten haben. Das Zuverlässigkeitsmaß für ein Wort in einer solchen Äußerung wird dadurch bestimmt, daß die Summe der Wahrscheinlichkeiten aller Satzalternativen, die dieses Wort enthalten, in Beziehung gesetzt wird zur Summe der Wahrscheinlichkeiten aller Satzalternativen. Der Vorteil dabei ist, daß in den Satzalternativen verschiedene Wissensquellen berücksichtigt sein können, beispielsweise ein Sprachmodell.

Die Spracherkennung mit dabei gebildeten Zuverlässigkeitsmaßen kann auf verschiedenen Gebieten angewendet werden. Eine Anwendung besteht beispielsweise darin, gesprochene Anfragen an ein Datenbanksystem zu verarbeiten und eine der Anfrage entsprechende Antwort zu erzeugen und auszugeben. Eine solche Anwendung erfordert nicht die vollständige Erkennung aller Wörter in der Äußerung, sondern es müssen nur die Wörter ermittelt werden, aus denen Angaben für eine Datenbankanfrage abgeleitet werden können. Allgemein soll unter einer Datenbank eine Wissensquelle mit gespeicherten Informationen verstanden werden, wobei jede Anfrage nachfolgend eine Aktion des Systems auslöst. Eine solche Aktion kann auch die Herstellung einer Verbindung in einem Telefon-Vermittlungssystem sein.

Ein derartiges Datenbank-Anfragesystem ist bekannt aus der EP 0 702 353 A2 (PHD 94-120 EP). Dabei wird aus dem Sprachsignal zunächst ein Wortgraph gebildet, und dieser wird in einen Konzeptgraph umgesetzt, der nur Wörter bzw. Attribute enthält, die für die Datenbankanfrage relevant sind. Ein oder mehrere Attribute können dabei aus einem Wort oder auch aus mehreren Wörtern abgeleitet werden. Die für die Datenbank nicht benötigten Teile der Äußerung werden in sogenannte "Füller" umgesetzt, von denen im wesentlichen nur deren Bewertungswerte berücksichtigt werden. Ein Konzept entspricht einer bestimmten Bedeutung oder allgemeiner einem Element aus einer Menge alternativer semantischer Interpretationen, beispielsweise bei einem Fahrplan-Auskunftssystem gibt es unter anderem die Konzepte "Zielbahnhof", "Abfahrtsbahnhof", "Datum" und "Uhrzeit". Jedem Konzept können eine Anzahl Attribute zugeordnet sein, beispielsweise Bahnhofsnamen. Aus einem bestimmten Attribut kann eine Angabe abgeleitet werden, z.B. wie erwähnt ein Bahnhofsname, die für die Datenbankanfrage notwendig ist. Die vollständige Datenbankanfrage wird allgemein aus mehreren Angaben zusammengesetzt. Insbesondere bei der Angabe von Datum und Uhrzeit bestehen jedoch verschiedene Möglichkeiten, wobei durch unterschiedliche Attribute, d.h. unterschiedliche Wörter oder Wortfolgen, der gleiche Tag oder die gleiche Uhrzeit angegeben werden kann.

Aus dem Konzeptgraphen können allgemein mehrere unterschiedliche Folgen von Attributen abgeleitet werden, wobei eine Folge auch aus nur einem einzigen Attribut bestehen kann. Diese unterschiedlichen Attribute in den Folgen können zu unterschiedlichen Angaben für ein Konzept führen, sie können jedoch auch in der gleichen Angabe resultieren. Im letzteren Fall hätte diese Angabe eine höhere Zuverlässigkeit, als wenn die Zuverlässigkeiten unterschiedlicher Attribute, d.h. der unterschiedlichen Wörter darin, getrennt betrachtet werden.

Aufgabe der Erfindung ist es, ein Verfahren zum Ermitteln eines Zuverlässigkeitsmaßes anzugeben, das für solche Datenbankanfragen besonders vorteilhaft arbeitet.

Das Prinzip der erfindungsgemäßen Lösung besteht darin, daß ein Zuverlässigkeitsmaß nicht für ein bestimmtes Wort ermittelt wird, sondern für eine bestimmte, aus einem oder mehreren Attributen resultierende Angabe. Da zumindest bestimmten einzelnen Angaben mehrere verschiedene Attribute zugeordnet sein können, werden für die Ermittlung des Zuverlässigkeitsmaßes alle unterschiedlichen Folgen von Attributen herangezogen, die ein Attribut für dieselbe Angabe enthalten. Dieses Vorgehen ist deswegen zweckmäßig, da die Datenbankanfrage bzw. der Zugriff auf die Datenbank schließlich aus der Angabe und nicht unmittelbar aus einem Attribut abgeleitet wird.

Da das Zuverlässigkeitsmaß von den Wahrscheinlichkeitswerten für jede Folge abgeleitet ist, während aus der Spracherkennung ein Bewertungswert für jede Folge von Attributen entsteht, muß dieser zunächst in einen Wahrscheinlichkeitswert umgerechnet werden. Dazu wird der Bewertungswert jeder Folge mit einer ersten Zahl multipliziert, beispielsweise 0,4, und das Ergebnis wird als negativer Exponent für die Basis des natürlichen Logarithmus verwendet, und diese Exponierung wird noch mit einem Faktor multipliziert, der so gewählt ist, daß die Summe der so gebildeten Wahrscheinlichkeiten aller Folgen gleich 1 ist. Aus der Summe dieser Wahrscheinlichkeiten von allen Folgen, in denen eine bestimmte Angabe enthalten ist, wird dann das Zuverlässigkeitsmaß für diese Angabe abgeleitet.

## Patentansprüche

1. Verfahren zum Ermitteln wenigstens eines Zuverlässigkeitsmaßes aus einem Sprachsignal mit folgenden Schritten:
aus dem Sprachsignal wird ein Wortgraph und daraus ein Konzeptgraph mit Bewertungswerten abgeleitet, wobei ein Konzept einem Element aus einer Menge alternativer semantischer Interpretationen entspricht,
aus dem Konzeptgraphen werden unterschiedliche Folgen von Attributen, die unterschiedlichen Wörtern oder Wortfolgen entsprechen, abgeleitet, wobei jeder Folge ein Bewertungswert zugeordnet wird und jedes Attribut einer Angabe entspricht und
wenigstens einige Angaben mehreren verschiedenen Attributen entsprechen, wobei aus einer Angabe ein Zugriff auf eine Wissensquelle mit gespeicherten Informationen abgeleitet wird, aus den Bewertungswerten aller Folgen von Attributen werden Wahrscheinlichkeitswerte für diese Folgen bestimmt,
aus den Wahrscheinlichkeiten für alle unterschiedlichen Folgen, die ein Attribut für dieselbe Angabe enthält, wird ein Zuverlässigkeitsmaß für diese Angabe gebildet.

2. Verfahren nach Anspruch 1, wobei die Bewertungswerte aller Folgen durch Multiplikation mit einer ersten Zahl kleiner 1 in neue Bewertungswerte umgesetzt werden, die neuen Bewertungswerte durch Exponierung und Multiplikation mit einer zweiten Zahl in Wahrscheinlichkeitswerte umgesetzt werden, indem die zweite Zahl derart gewählt ist, daß die Summe der Wahrscheinlichkeitswerte aller Folgen gleich 1 ist, und das Zuverlässigkeitsmaß einer Angabe aus der Summe der Wahrscheinlichkeitswerte aller Folgen mit dieser Angabe abgeleitet ist.

## Claims

1. A method of determining at least a reliability measure from a speech signal, the method comprising the steps of:
deriving a word graph from the speech signal and deriving a concept graph with weighting values from said word graph, in which a concept corresponds to an element in a quantity of alternative semantic interpretations,
deriving different sequences of attributes from the concept graphs, with a weighting value being assigned to each sequence and each attribute corresponding to a data and a plurality of various attributes corresponding to at least some data, while an access to a source of knowledge with stored information is derived from a data,
determining, from the weighting values of all sequences of attributes, probability values for said sequences,
constituting a reliability measure for a data from the probabilities for all of the different sequences comprising an attribute for said data.

2. A method as claimed in claim 1, wherein the weighting values of all sequences are converted into new weighting values by way of multiplication by a first number which is smaller than 1, the new weighting values are converted into probability values by way of exponential formation and multiplication by a second number, the second number being chosen in such a way that the sum of the probability values of all sequences is equal to 1, and the reliability measure of a data is derived from the sum of the probability values of all sequences comprising this data.

## Revendications

1. Procédé de détermination d'au moins une mesure de fiabilité à partir d'un signal de parole comportant les étapes suivantes:
un graphique de mots est dérivé du signal de parole et, à partir de là, un graphique de concept avec des valeurs d'évaluation, un concept correspondant à un élément d'une quantité d'interprétations sémantiques alternatives,
à partir du graphique de concept sont dérivées différentes séquences d'attributs, qui correspondent à différents mots ou séquences de mots, une valeur d'évaluation étant attribuée à chaque séquence et chaque attribut correspondant à une indication et au moins quelques indications correspondant à plusieurs attributs différents, un accès à une source de connaissances avec des informations enregistrées étant dérivé d'une indication, des valeurs de probabilité sont déterminées pour ces séquences à partir des valeurs d'évaluation de toutes les séquences d'attributs,
une mesure de fiabilité pour cette indication est formée à partir des probabilités pour toutes les séquences différentes que contient un attribut pour la même indication.

2. Procédé selon la revendication 1, dans lequel les valeurs d'évaluation de toutes les séquences étant converties par multiplication avec un premier nombre inférieur à 1 en nouvelles valeurs d'évaluation, les nouvelles valeurs d'évaluation sont converties par mise en exposant et multiplication par un deuxième nombre en valeurs de probabilité en choisissant le deuxième nombre de telle sorte que la somme des valeurs de probabilité de toutes les séquences soit égale à 1 et la mesure de fiabilité d'une indication est dérivée de la somme des valeurs de probabilité de toutes les séquences avec cette indication.
